# EUROPEAN PATENT APPLICATION

(11) **EP 4 818 060 A1**
(43) Date of publication of application: **07.10.2026**
(21) Application number: 26167858.5
(22) Date of filing: 26.03.2026
(51) Int. Cl.: B65B 61/20, G01N 21/88, G01N 21/90, B07C 5/34

(54) **INSPECTION SYSTEM FOR A STRAW APPLICATOR DEVICE CONFIGURED TO APPLY DRINKING STRAWS ONTO PACKAGES CONTAINING A POURABLE PRODUCT AND METHOD FOR INSPECTING SUCH PACKAGES**

(30) Priority: 04.04.2025 IT 202500007266
(71) Applicant: Tetra Laval Holdings & Finance S.A., 1009 Pully (CH)
(72) Inventor: BOZZOLI, Valerio, 41123 Modena (IT)
(74) Representative: Tetra Pak Patent Attorneys

(57) **Abstract**

There is described an inspection system (13) for a straw applicator device (10) configured to apply drinking straws (11) onto respective packages (2) containing a pourable product, the inspection system (13) is configured to sequentially inspect an inspection area (14) of each package (2) which includes a wall (2b) of the package (2) and the drinking straw (11) applied thereon, the inspection system (13) comprises: an imaging device configured to acquire an image of the inspection area (14) of each package (2); a control unit configured to analyze the acquired images for detecting or determining a feature representative of each straw (11); the control unit is configured to control a discard of the respective packages (2) as a function of the detected or determined feature .

## Description

### TECHNICAL FIELD

The present invention relates to an inspection system for a straw applicator device configured to apply drinking straws on respective packages containing a pourable product, preferably a pourable food product.

The present invention also relates to a method for inspecting packages containing a pourable product, and in particular for inspecting an inspection area of such packages comprising a package wall and a drinking straw applied to such wall.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material.

The packaging material has a multilayer structure comprising a base layer, e.g. made of paper, covered on both sides with layers of heat-sealable material, e.g. polyethylene.

In the case of aseptic packages for long-storage products, such as UHT milk, the packaging material also comprises a layer of oxygen-barrier material, e.g. an aluminum foil, which is superimposed on a layer of heat-sealable material, and is in turn covered with another layer of heat-sealable material forming the inner face of the package eventually contacting the food product.

Packages of this sort are normally produced on fully automatic packaging machines, which form and fill the packages starting from a multilayer web of packaging material.

In particular, a continuous tube is formed from the web of packaging material which is initially wound in a reel and fed through a plurality of unwinding rollers.

The web of packaging material is typically sterilized in the packaging machine, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, while advanced by the aforementioned unwinding rollers, is folded to form the tube by means of a known web folding unit and then sealed longitudinally.

In order to perform the package forming operations, the tube is continuously fed along a first direction, normally a straight vertical direction, is filled with the sterilized food product from above and is formed, sealed and subsequently cut along equally spaced transversal cross-sections extending along a second direction, normally a direction orthogonal to the first direction.

To this end, the known packaging machines comprise a forming and sealing unit configured to form the tube, so as to imprint an external shape to it, corresponding to the desired shape of the package, and to seal the tube at equally spaced cross-sections orthogonal to the tube advancement direction.

So-called pillow packs are obtained thereby, which have a longitudinal sealing band, a top transversal sealing band and a bottom transversal sealing band. The pillow packs are then cut at the cross-sections to be separated from one another and directed to a folding unit of the packaging machine for the final folding thereof.

The finished packages are thereby obtained.

Many single-use disposable packages according to the above, and typically used for containing beverages such as fruit juice, ice tea, flavored milk or the like, are produced in so-called portion volumes, intended to be consumed directly from the package. Generally, these single-use packages are provided with a drinking straw, which is enveloped in a protective envelope and secured to a lateral wall of the package.

On another wall of the package, often the top wall, a hole is obtained by punching out the packaging material forming the package, in particular by punching out the base layer made of paper, thereby obtaining a hole covered by the other lamination layers.

This configuration allows to penetrate the hole by perforating the lamination layers covering the hole with the drinking straw accompanying the package, in order to consume the pourable food product enclosed within the package.

For the purpose of securing the drinking straws to the respective packages, the known packaging machines comprise at least one straw applicator device, which is configured to apply drinking straws, housed in their protective envelopes, on fully formed and sealed packages.

More specifically, as each package is advanced through such straw applicator device, the straw applicator device applies the drinking straws to the aforementioned lateral wall thereof.

A typical straw applicator device is known from WO-A-2016096380.

Although the known straw applicator devices work satisfyingly well, the Applicant has observed that they are still prone to further improvement, in particular as per ensuring in an efficient manner that each finished package together with the respective straw applied thereon meets the expected quality, taking into account the diverse possible formats of the packages and of the straws, and possible deviations in the application of such straws.

### DISCLOSURE OF INVENTION

It is therefore an object of the present invention to provide an inspection system for a straw applicator device which is designed to meet the above-mentioned need in a straightforward and low-cost manner.

This object is achieved by an inspection system for a straw applicator device as claimed in the appended independent claim 1.

It is a further object of the present invention to provide a method for inspecting packages containing a pourable product which is designed to meet the above-mentioned need in a straightforward and low-cost manner.

This object is achieved by a method for inspecting packages as claimed in the appended independent claim 14.

Preferred embodiments of the present invention are laid down in the appended dependent claims.

### BRIEF DESCRIPTION OF THE DRAWINGS

Non-limiting embodiments of the present invention will be described by way of example with reference to the accompanying drawings, in which:
Figure 1 is a schematic perspective view, with parts removed for clarity, of a packaging machine including a straw applicator device and an inspection system according to the present invention;

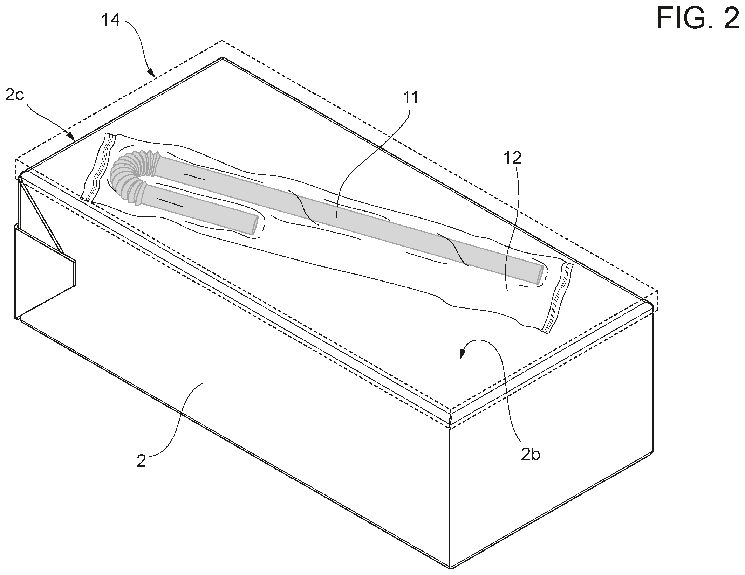

Figure 2 is a larger-scale perspective view, with parts removed for clarity, of a package produced with the packaging machine of Figure 1, onto which a drinking straw has been applied by the straw applicator device;
Figures 3 to 6 are schematic side views, with parts removed for clarity, of the package of Figure 2 which show respective steps or embodiments of an inspection process carried out by the inspection system according to the invention.

### BEST MODE FOR CARRYING OUT THE INVENTION

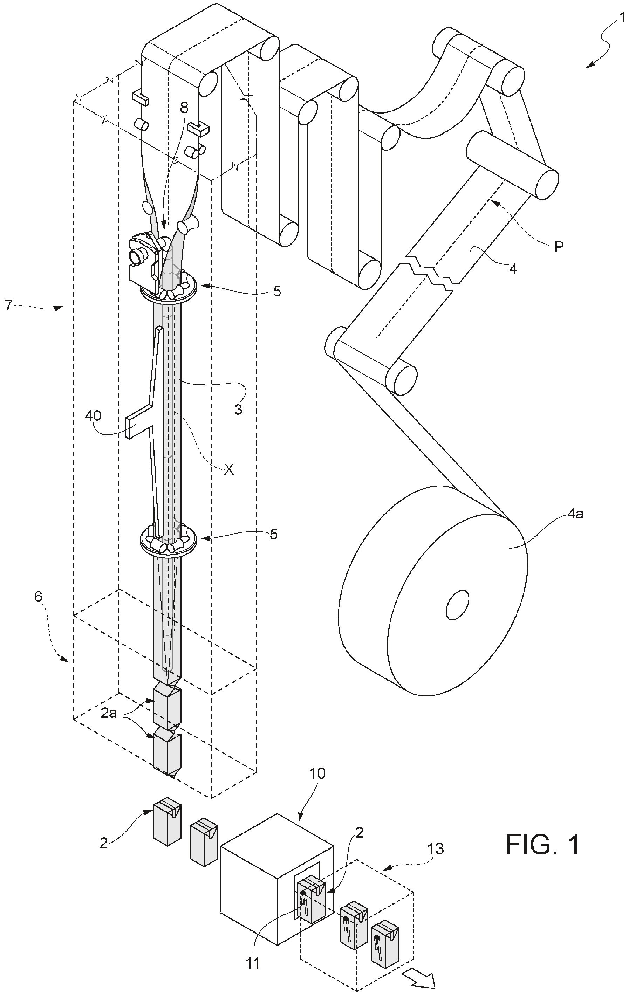

With reference to Figure 1, number 1 indicates as a whole a non-limiting example of a packaging machine configured for producing a plurality of sealed packages 2 containing a pourable product, preferably a pourable food product such as pasteurized or UHT milk, water, fruit juice, wine, peas, beans, etc.

In detail, packaging machine 1 is configured to form, seal and fold packages 2 starting from a web 4 of packaging material, which is initially wound in a reel 4a, and then folded into a tube 3 of packaging material, as explained below.

Preferably, the packaging material has a multilayer structure (not shown), and comprises a layer of fibrous material, e.g. paper, covered on both sides with respective layers of heat-sealable material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-sealable material, and is in turn covered with another layer of heat-sealable material, the latter forming the inner face of package 2 eventually contacting the pourable product.

As said, the packaging material is initially provided in the form of a web 4.

As shown in Figure 1, the packaging machine 1 comprises conveying means (such as a plurality of idle and motorized unfolding rollers) configured to advance the web 4 from reel 4a and along an advancement path P.

The packaging machine 1 comprises a web folding device 5 for progressively folding the advancing web 4 into a tube 3 of packaging material, in a manner known and not described in detail.

The packaging machine 1 comprises a sterilization unit (not shown) configured for applying a sterilizing agent, for example containing hydrogen peroxide, on web 4 prior to its folding into tube 3.

The packaging machine 1 comprises a sealing element 40 for providing tube 3 with a longitudinal seal, in a manner known and not described in detail.

The packaging machine 1 comprises a forming and sealing unit 6 for forming tube 3 by imparting a predetermined external shape, corresponding to a precursor of the shape of package 2, to successive longitudinal portions of tube 3, and for sealing tube 3 at equally spaced cross-sections, according to a manner known and not described in detail.

The packaging machine 1 comprises an isolation chamber 7 internally defining an environment containing a controlled atmosphere, in particular sterile and/or aseptic gas, preferably sterile and/or aseptic air, and housing the forming and sealing unit 6 and the web folding device 5.

The packaging machine 1 comprises a filling system 8 (only partially shown) to fill tube 3 with the pourable product.

Preferably, forming and sealing unit 6 has an axis X along which tube 3 is fed, in use.

Axis X is parallel to a straight direction, which preferably is a straight vertical direction.

Hence, in use, tube 3 is fed along axis X, downwards, and while being filled from above is formed and sealed by forming and sealing unit 6.

More specifically, tube 3 is drawn (downwards) along axis X by forming and sealing unit 6.

In this way, a plurality of pillow packs 2a are obtained.

The packaging machine 1 further comprises a folding unit (known per se and not shown) for folding the pillow packs 2a, thereby obtaining packages 2, according to a manner known and not described in detail.

The packaging machine 1 further comprises a straw applicator device 10 configured to apply drinking straws 11 onto packages 2.

Opportunely, the straw applicator device 10 is located downstream of the folding unit and is configured to be fed with formed packages 2.

The straw applicator device 10 is configured to apply each drinking straw 11 onto a wall 2b of each package 2.

In greater detail, wall 2b is a front wall of package 2.

For the sake of brevity, reference will be made in the following to a single package 2 and a single drinking straw 11 applied onto wall 2b thereof.

Straw 11 is designed to extract the pourable product from the interior of package 2.

According to this non-limiting preferred embodiment, straw 11 is of the flexible type. Straw 11 may be made of plastic or paper material.

In particular, straw 11 comprises a first straight portion, a second straight portion, shorter than the first straight portion, and a curved bellows portion, which connects the first straight portion and the second straight portion.

More in particular, the bellows defined by the curved bellows portion allows a movement of the second portion relatively to the first portion, so that the straw 11 can be conveniently folded to allow the user to extract (drink) the pourable product.

In an alternative embodiment not shown, the straw 11 may be defined by a single straight portion.

In an alternative embodiment not shown, another extraction element configured to extract the pourable product from the package 2 may be applied onto package 2, such as a spoon, a fork, or the like.

The straw 11 is preferably housed in a protective envelope 12 made of a second packaging material, for example polyethylene or plant based polyethylene.

Hence, each envelope 12 and the respective drinking straw 11 constitute an attachable assembly configured to be applied, in particular attached, onto the wall 2b of the package 2 by straw applicator device 10.

On another wall of each package 2, for example the top wall 2c, a hole (not shown) is obtained by punching out the packaging material, in particular by punching out the base layer made of paper, thereby obtaining a hole covered by at least one of the other layers, i.e. the heat-sealable material layers and the gas-and-light barrier layer.

This configuration makes it possible to penetrate the hole by perforating the layer(s) covering the hole with the straw 11 attached on package 2, in order to extract the pourable product contained therein.

Preferably, straw applicator device 10 is configured to apply the straw 11 to the package 2 by attaching it with glue (in particular, hot glue).

Packaging machine 1 further comprises an inspection system 13 (Figure 1) configured to sequentially inspect an inspection area 14 of each package 2.

Inspection area 14 includes wall 2b and the straw 11 applied thereon.

Accordingly, inspection area 14 also comprises the respective envelope 12 enclosing the straw 11.

More specifically, the inspection system 13 is located downstream the straw applicator device 10, or at least downstream of the part of the straw applicator device 10 which applies, in use, the straws 11 to the packages 2.

In one embodiment, the straw applicator device 10 may comprise the inspection system 13. That is, inspection system 13 may be considered to be part of straw applicator device 10.

The inspection system 13 comprises an imaging device (not shown), for example a 2D camera or a 3D camera, configured to acquire an image of the inspection area 14 of each package 2. Preferentially, the imaging device is a 3D camera configured to emit a laser beam towards the inspection area 14.

The inspection system 13 further comprises a control unit or analyzing unit (not shown).

The control unit is configured to analyze the acquired images for detecting or determining a feature representative of each straw 11.

According to an aspect of the present invention, the control unit is configured to control a discard of the respective packages 2 as a function of the detected or determined feature.

According to a non-limiting preferred embodiment of the present invention, the control unit is configured to determine a surface area of each straw 11 as a function of the respective acquired image.

The control unit is further configured to compare the determined surface area with a nominal surface area of the straw 11.

The control unit is further configured to calculate a deviation of the determined surface area from the nominal surface area.

According to such preferred embodiment, the control unit is configured to control a discard of the packages 2 as a function of the calculated deviation.

In other words, the aforementioned feature is defined, according to such preferred embodiment, by the surface area of the straw 11.

For the sake of brevity, reference will be made in the following to a single package 2 and to a single inspection area 14 to be inspected by the inspection system 13. However, all the functional and structural features described hereinafter are applicable to each package 2, inspection area 14 and straw 11.

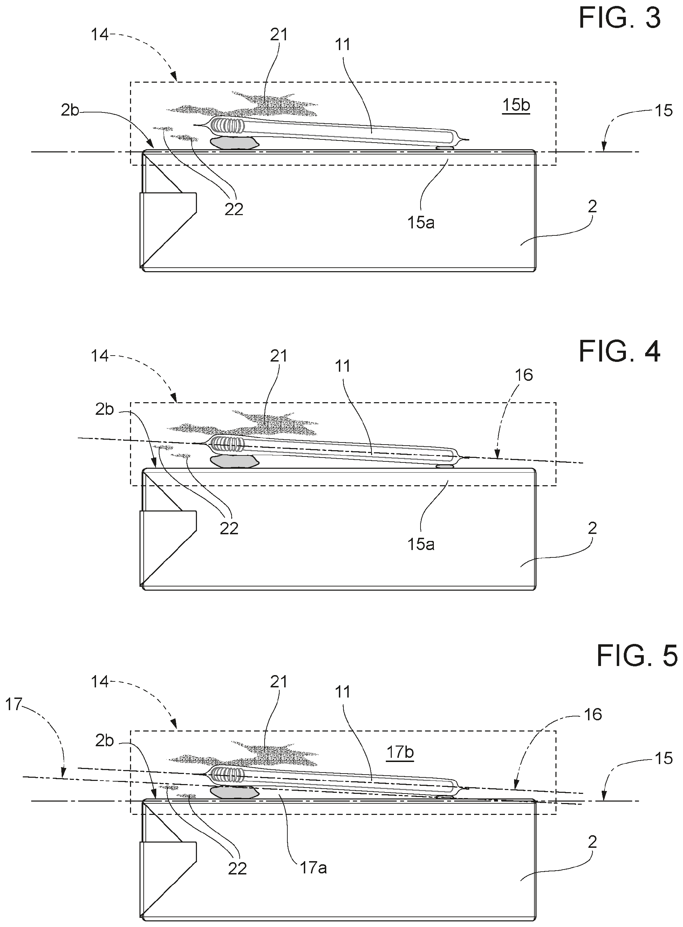

As schematized in Figure 3, according to an aspect of the present invention, the control unit is configured to determine/estimate a wall reference plane 15 representative of the position of the wall 2b in the inspection area 14, for each acquired image and as a function of the acquired image of the inspection area 14. In particular, the wall reference plane 15 is substantially parallel to said wall 2b and virtually divides the inspection area 14 in a wall side area 15a, including the wall 2b, and a straw side area 15b, including the straw 11.

More specifically, the imaging device is configured to define, for each acquired image, a point cloud (not shown) including a set of points in the space representative of the wall 2b, of the straw 11, of the position of the wall 2b and of the position of the straw 11 within the inspection area 14.

In particular, the imaging device is configured to acquire said image of the inspection area 14, to convert said image in a set of cloud points or pixels (i.e. the point cloud) and to feed the point cloud to the control unit.

In detail, each point of the point cloud defines/represents a datum or a data set representative of the position in space of the respective point of the straw 11 or of the wall 2b.

In greater detail, each point, or pixel, of the point cloud includes spatial coordinates or information of the respective point of the wall 2b or of the straw 11 within the inspection area 14.

According to an aspect of the invention, the wall reference plane 15 virtually divides the point cloud in a first set of points, including a majority of points representative of the wall 2b, and a second set of points, including a majority of points representative of the straw 11.

Accordingly, the points of the first set of points are arranged in the wall side 15a area, whereas the points of the second set of points are arranged in the straw side area 15b.

Advantageously, the control unit is configured to detect or determine said feature, i.e. the aforementioned surface area, as a function of the points of the point cloud contained in the second set of points.

According to the above, the inspection system 13 is able to automatically detect if a straw 11 is effectively and correctly applied to the package 2 in a quick and efficient manner, and therefore selectively commanding a discard of the package 2 if necessary, i.e. if a straw 11 is not correctly applied thereto following the aforementioned deviation calculation, and in particular if the determined surface area deviates from the nominal surface area.

As schematically shown in Figures 3 to 6, the straw 11 may be applied on package 2 in such a way that the straw 11 is not perfectly parallel to the wall 2b. For example, the amount of glue used in one of the at least two necessary glue dots may be greater than the amount used in the other of the at least two glue dots.

Alternatively or additionally, the wall 2b may be bulged, for example due to the pressure within the package 2 or due to the shape of the package 2, in some particular package formats.

In light of the above, wall reference plane 15 may not be appropriately representative of the actual conformation of wall 2b, and therefore the estimation of the position of straw 11, and thus of its surface area, may be affected.

To this end, as schematized in Figure 4, according to a preferred embodiment of the invention the control unit is configured to determine/estimate, as a function of said second set of points of the point cloud, a straw reference plane 16 representative of the position and/or orientation of the straw 11 in the inspection area 14.

Accordingly, the straw reference plane 16 is arranged at the straw side area 15b of the inspection area 14.

In one embodiment, the control unit is configured to perform an iterative calculation and estimation of the straw reference plane 16 based on the second set of points of the point cloud.

Appropriately, the straw reference plane 16 is substantially parallel to the straw 11.

Accordingly, the straw reference plane 16 is representative of:
- an inclination of the straw 11 relative to the wall 2b; and/or
- a distance of the straw 11 relative to the wall 2b; and/or
- a roll angle of the straw 11 with respect to the wall 2b and to a longitudinal axis of the straw 11; and/or
- a pitch angle of the straw 11 with respect to the wall 2b and to a transversal axis of the straw 11.

Preferably, the straw reference plane 16 is representative of all the above features of the straw 11, thereby defining an average plane of the straw 11 which takes into account its real or actual position in the inspection area 14.

As schematized in Figure 5, the control unit is advantageously configured to calculate a translated straw reference plane 17 which is parallel to the straw reference plane 16 and is arranged at the wall reference plane 15 or, in other words, is arranged closer to the wall reference plane 15 than the straw reference plane 16.

In other words, the control unit is configured to virtually translate the straw reference plane 16 towards the wall side area 15a and at the wall reference plane 15, so as to obtain or define the translated straw reference plane 17.

In practice, considering an outward direction orthogonal to the wall 2b, the straw reference plane 16 is arranged at the straw, e.g. in the middle of the straw 11 or defining a middle plane of the straw 11, whereas the translated straw reference plane 17 is arranged below the straw 11, and conveniently entirely below the straw 11.

Moreover, the translated straw reference plane 17 is preferably located above wall 2b.

In light of the above, the translated straw reference plane 17 is located between the points of the point cloud representative of the wall 2b and the points of the point cloud representative of the straw 11, relatively to the outward direction.

In this way, the translated straw reference plane 17 divides the inspection area 14 (and the acquired image) in a first side area 17a including the points of the point cloud representative of the wall 2b and a second side area 17b including the points of the point cloud representative of the straw 11.

Advantageously, the control unit is configured to detect or determine said feature, i.e. the aforementioned surface area of the straw 11, as a function of the (translated straw reference plane 17 and of the) points of the point cloud contained in the second side area 17b.

Thanks to such configuration, the detection/determination of the feature or surface area of the straw 11 is more precise with respect to the one described above and based solely on the wall reference plane 15.

In fact, being the detection/determination based on a plane (the translated straw reference plane 17) which is oriented parallel to the real and actual orientation of the straw 11 within the inspection area 14, the Applicant has observed that the probability that the second side area 17b includes points or pixels of the point cloud which do not pertain to (i.e. which are not representative of) the straw 11, and which may therefore be detrimental to a correct analysis of inspection area 14, is significantly reduced.

More precisely, when solely the wall reference plane 15 is considered as basis for the virtual division of the inspection area 14 and the point cloud, and as a basis for defining the points of the point cloud representative of the straw 11, noise 21, 22 in the form of additional points of the point cloud may be undesirably included in the second set of points.

Such noise 21, 22 may be generated in some cases as a result of the presence of the envelope 12, which reflective material could trigger the imaging device in generating additional points of the point cloud.

Moreover, due to the fact that the straw 11 is not perfectly parallel to wall 2b, and therefore to the wall reference plane 15, some relevant points of the point cloud representative of the straw 11 and contained in the second set of points may be disregarded during the calculation, thereby leading to a sub-optimal estimation and, eventually, to a false positive that triggers a discard of the package 2.

This aspect will be better explained hereinafter.

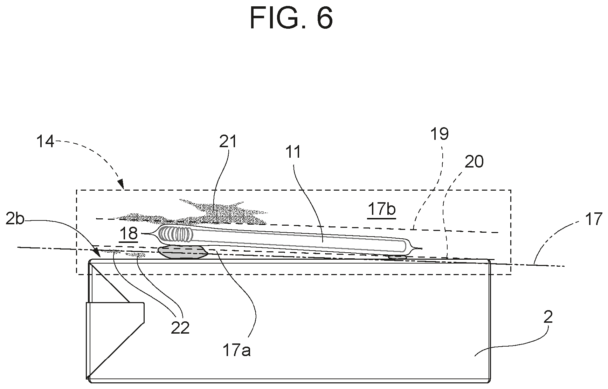

According to an aspect of the invention, as schematized in Figure 6, the control unit is configured to determine a sub-area 18 of the inspection area 14 arranged at said second side area 17b and delimited by two delimitation planes 19, 20 parallel to the translated straw reference plane 17, so as to define a third set of points of the point cloud including points contained within the sub-area 18 between the two delimitation planes 19, 20.

Advantageously, the control unit is configured to detect or determine said feature, i.e. the aforementioned surface area of the straw 11, as a function of the points of the point cloud contained in the third set of points.

The Applicant has observed that this configuration significantly improves the quality of the detection and determination of the straw 11.

In detail, when the calculation is based solely on the wall reference plane 15, the two delimitation planes 19, 20 defining the sub-area 18 are parallel to the wall reference plane 15. Therefore, the probability that the sub-area 18 includes noise 21, 22 and excludes relevant points of the straw 11 due to the straw 11 being non-parallel to the wall 2b is increased. This may lead to a sub-optimal analysis result of the inspection area 14.

Instead, thanks to the above configuration, the inclusion of noise 21, 22 and the exclusion of relevant points are highly reduced and in particular are avoided, thereby resulting in a better detection and determination of the feature, i.e. of the surface area of the straw 11.

Hence, the false positives, i.e. the packages 2 erroneously discarded due to a sub-optimal detection/determination, are significantly reduced.

In one embodiment, the control unit is configured to define a distance between the two delimiting planes 19, 20 as a function of a diameter of the straw 11.

In other words, the sub-area 18 is calculated as a function of the diameter of the straw 11. The diameter of the straw 11 may be an input data which is fed to the control unit by an operator.

Being the two delimitation plane 19, 20 parallel to the translated straw reference plane 17, i.e. parallel to the real and actual orientation of the straw 11, the distance between the two delimitation planes 19, 20 can be reduced with respect to the case in which the two delimitation planes 19, 20 are parallel to the wall reference plane 15.

Hence, reduction of noise 21, 22 is further improved. From the foregoing, it is clear that the inspection system 13 allows to carry out a method for inspecting an inspection area 14 of packages 2 containing a pourable product, the inspection area 14 including a wall 2b of the package 2 and a drinking straw 11 applied thereon, the method comprising the steps of:
- acquiring an image of the inspection area 14 of each package 2;
- analyzing the acquired image for detecting or determining a feature representative of each straw 11;
- comparing the detected or determined feature with a nominal feature representative of the straw 11;
- calculating a deviation of the detected or determined feature from the nominal feature;
- discarding the respective packages 2 as a function of the calculated deviation.

Preferably, detecting a feature comprises determining a surface area of the straw 11.

Preferably, the step of acquiring comprises defining, for each acquired image, a point cloud including a set of points in the space representative of the wall 2b, of the straw 11, of the position of the wall 2b and of the position of the straw 11 within the respective inspection area 14;
wherein the method comprises the steps of:
- determining/estimating a wall reference plane 15 representative of the position of the wall 2b in the inspection area 14, for each acquired image and as a function of the acquired image of the inspection area 14, the wall reference plane 15 being substantially parallel to said wall 2b and virtually dividing the inspection area 14 in a wall side area 15a, including the wall 2b, and a straw side area 15b, including the straw 11;
- virtually dividing, by means of the wall reference plane 15, the point cloud in a first set of points, including a majority of points representative of the wall 2b, and a second set of points, including a majority of points representative of the straw 11;
- detecting or determining said feature as a function of the points of the point cloud contained in the second set of points.

Preferably, the method comprises the steps of:
- determining/estimating, as a function of said second set of points of the point cloud, a straw reference plane 16 representative of the position and/or orientation of the straw 11 in the inspection area 14, for each acquired image, the straw reference plane 16 being arranged at said straw side 15b of the inspection area 14;
- calculating a translated straw reference plane 17 which is parallel to the straw reference plane 16 and is arranged at the wall reference plane 15, so that the translated straw reference plane 17 divides the inspection area 14 (and the acquired image) in a first side 17a including the points of the point cloud representative of the wall 2b and a second side 17b including the points of the point cloud representative of the straw 11;
- detecting or determining said feature as a function of the (translated straw reference plane 17 and of the) points of the point cloud contained in the second side 17b.

Preferably, the method comprises the steps of:
- determining a sub-area 18 of the inspection area 14 arranged at said second side 17b and delimited by two delimitation planes 19, 20 parallel to the translated straw reference plane 17, so as to define a third set of points of the point cloud including points contained within the sub-area 18 between the two delimitation planes 19, 20;
- detecting or determining said feature as a function of the points of the point cloud contained in the third set of points.

The advantages of the inspection system 13 and of the method for inspecting according to the present invention will be clear from the foregoing description.

In particular, thanks to the peculiar approach for estimating the real or actual position of the straw 11 within the inspection area 14 according to the invention, the percentage of "false positives", i.e. of packages 2 without straws 11, detected by the inspection system 13 is largely decreased.

More specifically, this new algorithm allows for compensating misalignment between straw 11 and package 2 or wall 2b, typically linked to a bent straw 11 or to a rounded or bulged wall 2b, or to not perfect glue dots application.

Furthermore, the new algorithm allows for avoiding or limiting noise 21, 22 generated by the imaging device when interacting with envelope 12 (e.g. due to the imaging device interacting with reflective polyethylene) and/or for better including all the points of the point cloud representative of the straw 11, thereby resulting in a better estimation of the position of the straw 11 and therefore in a better analysis.

Clearly, changes may be made to the inspection system 13 and to the method for inspecting as described herein without, however, departing from the scope of protection as defined in the accompanying claims.

## Claims

1. Inspection system (13) for a straw applicator device (10) configured to apply drinking straws (11) onto respective packages (2) containing a pourable product, the inspection system (13) being configured to sequentially inspect an inspection area (14) of each package (2), the inspection area (14) including a wall (2b) of the package (2) and the drinking straw (11) applied thereon, the inspection system (13) comprising:
- an imaging device configured to acquire an image of the inspection area (14) of each package (2);
- a control unit configured to analyze the acquired images for detecting or determining a feature representative of each straw (11);
wherein the control unit is configured to control a discard of the respective packages (2) as a function of the detected or determined feature.

2. Inspection system as claimed in claim 1, wherein the control unit is configured to determine a surface area of each straw (11) based on the respective acquired image, to compare the determined surface area with a nominal surface area of the straw and to calculate a deviation of the determined surface area from the nominal surface area;
and wherein the control unit is configured to control a discard of the packages (2) as a function of the calculated deviation.

3. Inspection system as claimed in claim 1 or 2, wherein the control unit is configured to determine/estimate a wall reference plane (15) representative of the position of the wall (2b) in the inspection area (14), for each acquired image and as a function of the acquired image of the inspection area (14), the wall reference plane (15) being substantially parallel to said wall (2b) and virtually dividing the inspection area (14) in a wall side area (15a), including the wall (2b), and a straw side area (15b), including the straw (11).

4. Inspection system as claimed in claim 3, wherein the imaging device is configured to define, for each acquired image, a point cloud including a set of points in the space representative of the wall (2b), of the straw (11), of the position of the wall (2b) and of the position of the straw (11) within the respective inspection area (14);
wherein the wall reference plane (15) virtually divides the point cloud in a first set of points, including a majority of points representative of the wall (2b), and a second set of points, including a majority of points representative of the straw (11);
and wherein the control unit is configured to detect or determine said feature as a function of the points of the point cloud contained in the second set of points.

5. Inspection system as claimed in claim 4, wherein the control unit is configured to determine/estimate, as a function of said second set of points of the point cloud, a straw reference plane (16) representative of the position and/or orientation of the straw (11) in the inspection area (14), for each acquired image, the straw reference plane (16) being arranged at said straw side area (15b) of the inspection area (14).

6. Inspection system as claimed in claim 5, wherein the straw reference plane (16) is representative of:
- an inclination of the straw (11) relative to the wall (2b); and/or
- a distance of the straw (11) relative to the wall (2b); and/or
- a roll angle of the straw (11) with respect to the wall (2b) and to a longitudinal axis of the straw (11); and/or
- a pitch angle of the straw (11) with respect to the wall (2b) and to a transversal axis of the straw (11).

7. Inspection system as claimed in claim 5 or 6, wherein the control unit is configured to calculate a translated straw reference plane (17) which is parallel to the straw reference plane (16) and is arranged at the wall reference plane (15), so that the translated straw reference plane (17) divides the inspection area (14) in a first side area (17a) including the points of the point cloud representative of the wall (2b) and a second side area (17b) including the points of the point cloud representative of the straw (11).

8. Inspection system as claimed in claim 7, wherein the control unit is configured to detect or determine said feature as a function of the points of the point cloud contained in the second side area (17b).

9. Inspection system as claimed in claim 7 or 8, wherein the control unit is configured to determine a sub-area (18) of the inspection area (14) arranged at said second side area (17b) and delimited by two delimitation planes (19, 20) parallel to the translated straw reference plane (17), so as to define a third set of points of the point cloud including points contained within the sub-area (18) between the two delimitation planes (19, 20);
and wherein the control unit is configured to detect or determine said feature as a function of the points of the point cloud contained in the third set of points.

10. Inspection system as claimed in claim 9, wherein the control unit is configured to define a distance between the two delimiting planes (19, 20) as a function of a diameter of the straw (11).

11. Packaging machine (1) for producing packages (2) containing a pourable product, the packaging machine (1) comprising:
- a package filling and forming unit configured to fill, form and seal a plurality of packages (2);
- a straw applicator device (10) configured to sequentially apply one drinking straw (11) onto each package (2);
- an inspection system (13) according to any one of the foregoing claims, arranged operatively downstream of the straw applicator device (10).

12. Method for inspecting an inspection area (14) of packages (2) containing a pourable product, the inspection area (14) including a wall (2b) of the package (2) and a drinking straw (11) applied thereon, the method comprising the steps of:
- acquiring an image of the inspection area (14) of each package (2);
- analyzing the acquired image for detecting or determining a feature representative of each straw (11);
- comparing the detected or determined quantity with a nominal feature representative of the straw (11);
- calculating a deviation of the detected or determined feature from the nominal feature;
- discarding the respective packages (2) as a function of the calculated deviation.

13. Method as claimed in claim 12, wherein the step of acquiring comprises defining, for each acquired image, a point cloud including a set of points in the space representative of the wall (2b), of the straw (11), of the position of the wall (2b) and of the position of the straw (11) within the respective inspection area (14);
wherein the method comprises the steps of:
- determining/estimating a wall reference plane (15) representative of the position of the wall (2b) in the inspection area (14), for each acquired image and as a function of the acquired image of the inspection area (14), the wall reference plane (15) being substantially parallel to said wall (2b) and virtually dividing the inspection area (14) in a wall side area (15a), including the wall (2b), and a straw side area (15b), including the straw (11);
- virtually dividing, by means of the wall reference plane (15), the point cloud in a first set of points, including a majority of points representative of the wall (2b), and a second set of points, including a majority of points representative of the straw (11);
- detecting or determining said feature as a function of the points of the point cloud contained in the second set of points.

14. Method as claimed in claim 13, and comprising the steps of:
- determining/estimating, as a function of said second set of points of the point cloud, a straw reference plane (16) representative of the position and/or orientation of the straw (11) in the inspection area (14), for each acquired image, the straw reference plane (16) being arranged at said straw side area (15b) of the inspection area (14);
- calculating a translated straw reference plane (17) which is parallel to the straw reference plane (16) and is arranged at the wall reference plane (15), so that the translated straw reference plane (17) divides the inspection area (14) in a first side area (17a) including the points of the point cloud representative of the wall (2b) and a second side area (17b) including the points of the point cloud representative of the straw (11);
- detecting or determining said feature as a function of the points of the point cloud contained in the second side area (17b).

15. Method as claimed in claim 14, and comprising the steps of:
- determining a sub-area (18) of the inspection area (14) arranged at said second side (17b) and delimited by two delimitation planes (19, 20) parallel to the translated straw reference plane (17), so as to define a third set of points of the point cloud including points contained within the sub-area (18) between the two delimitation planes (19, 20);
- detecting or determining said feature as a function of the points of the point cloud contained in the third set of points.

## Amended claims

### Amended claims in accordance with Rule 137(2) EPC.

1. Inspection system (13) for a straw applicator device (10) configured to apply drinking straws (11) onto respective packages (2) containing a pourable product, the inspection system (13) being configured to sequentially inspect an inspection area (14) of each package (2), the inspection area (14) including a wall (2b) of the package (2) and the drinking straw (11) applied thereon, the inspection system (13) comprising:
- an imaging device configured to acquire an image of the inspection area (14) of each package (2);
- a control unit configured to analyze the acquired images for detecting or determining a feature representative of each straw (11);
wherein the control unit is configured to control a discard of the respective packages (2) as a function of the detected or determined feature
wherein the control unit is configured to determine/estimate a wall reference plane (15) representative of the position of the wall (2b) in the inspection area (14), for each acquired image and as a function of the acquired image of the inspection area (14), the wall reference plane (15) being substantially parallel to said wall (2b) and virtually dividing the inspection area (14) in a wall side area (15a), including the wall (2b), and a straw side area (15b), including the straw (11),
**characterized in that** the imaging device is configured to define, for each acquired image, a point cloud including a set of points in the space representative of the wall (2b), of the straw (11), of the position of the wall (2b) and of the position of the straw (11) within the respective inspection area (14);
wherein the wall reference plane (15) virtually divides the point cloud in a first set of points, including a majority of points representative of the wall (2b), and a second set of points, including a majority of points representative of the straw (11);
and wherein the control unit is configured to detect or determine said feature as a function of the points of the point cloud contained in the second set of points.

2. Inspection system as claimed in claim 1, wherein the control unit is configured to determine a surface area of each straw (11) based on the respective acquired image, to compare the determined surface area with a nominal surface area of the straw and to calculate a deviation of the determined surface area from the nominal surface area;
and wherein the control unit is configured to control a discard of the packages (2) as a function of the calculated deviation.

3. Inspection system as claimed in any one of the previous claims, wherein the control unit is configured to determine/estimate, as a function of said second set of points of the point cloud, a straw reference plane (16) representative of the position and/or orientation of the straw (11) in the inspection area (14), for each acquired image, the straw reference plane (16) being arranged at said straw side area (15b) of the inspection area (14).

4. Inspection system as claimed in claim 3, wherein the straw reference plane (16) is representative of:
- an inclination of the straw (11) relative to the wall (2b); and/or
- a distance of the straw (11) relative to the wall (2b); and/or
- a roll angle of the straw (11) with respect to the wall (2b) and to a longitudinal axis of the straw (11); and/or
- a pitch angle of the straw (11) with respect to the wall (2b) and to a transversal axis of the straw (11).

5. Inspection system as claimed in claim 3 or 4, wherein the control unit is configured to calculate a translated straw reference plane (17) which is parallel to the straw reference plane (16) and is arranged at the wall reference plane (15), so that the translated straw reference plane (17) divides the inspection area (14) in a first side area (17a) including the points of the point cloud representative of the wall (2b) and a second side area (17b) including the points of the point cloud representative of the straw (11).

6. Inspection system as claimed in claim 5, wherein the control unit is configured to detect or determine said feature as a function of the points of the point cloud contained in the second side area (17b).

7. Inspection system as claimed in claim 5 or 6, wherein the control unit is configured to determine a sub-area (18) of the inspection area (14) arranged at said second side area (17b) and delimited by two delimitation planes (19, 20) parallel to the translated straw reference plane (17), so as to define a third set of points of the point cloud including points contained within the sub-area (18) between the two delimitation planes (19, 20);
and wherein the control unit is configured to detect or determine said feature as a function of the points of the point cloud contained in the third set of points.

8. Inspection system as claimed in claim 7, wherein the control unit is configured to define a distance between the two delimiting planes (19, 20) as a function of a diameter of the straw (11).

9. Packaging machine (1) for producing packages (2) containing a pourable product, the packaging machine (1) comprising:
- a package filling and forming unit configured to fill, form and seal a plurality of packages (2);
- a straw applicator device (10) configured to sequentially apply one drinking straw (11) onto each package (2);
- an inspection system (13) according to any one of the foregoing claims, arranged operatively downstream of the straw applicator device (10).

10. Method for inspecting an inspection area (14) of packages (2) containing a pourable product, the inspection area (14) including a wall (2b) of the package (2) and a drinking straw (11) applied thereon, the method comprising the steps of:
- acquiring an image of the inspection area (14) of each package (2);
- analyzing the acquired image for detecting or determining a feature representative of each straw (11);
- comparing the detected or determined quantity with a nominal feature representative of the straw (11);
- calculating a deviation of the detected or determined feature from the nominal feature;
- discarding the respective packages (2) as a function of the calculated deviation, **characterized in that** the step of acquiring comprises defining, for each acquired image, a point cloud including a set of points in the space representative of the wall (2b), of the straw (11), of the position of the wall (2b) and of the position of the straw (11) within the respective inspection area (14);
wherein the method comprises the steps of:
- determining/estimating a wall reference plane (15) representative of the position of the wall (2b) in the inspection area (14), for each acquired image and as a function of the acquired image of the inspection area (14), the wall reference plane (15) being substantially parallel to said wall (2b) and virtually dividing the inspection area (14) in a wall side area (15a), including the wall (2b), and a straw side area (15b), including the straw (11);
- virtually dividing, by means of the wall reference plane (15), the point cloud in a first set of points, including a majority of points representative of the wall (2b), and a second set of points, including a majority of points representative of the straw (11);
- detecting or determining said feature as a function of the points of the point cloud contained in the second set of points.

11. Method as claimed in claim 10, and comprising the steps of:
- determining/estimating, as a function of said second set of points of the point cloud, a straw reference plane (16) representative of the position and/or orientation of the straw (11) in the inspection area (14), for each acquired image, the straw reference plane (16) being arranged at said straw side area (15b) of the inspection area (14);
- calculating a translated straw reference plane (17) which is parallel to the straw reference plane (16) and is arranged at the wall reference plane (15), so that the translated straw reference plane (17) divides the inspection area (14) in a first side area (17a) including the points of the point cloud representative of the wall (2b) and a second side area (17b) including the points of the point cloud representative of the straw (11);
- detecting or determining said feature as a function of the points of the point cloud contained in the second side area (17b).

12. Method as claimed in claim 11, and comprising the steps of:
- determining a sub-area (18) of the inspection area (14) arranged at said second side (17b) and delimited by two delimitation planes (19, 20) parallel to the translated straw reference plane (17), so as to define a third set of points of the point cloud including points contained within the sub-area (18) between the two delimitation planes (19, 20);
- detecting or determining said feature as a function of the points of the point cloud contained in the third set of points.
